# EUROPEAN PATENT APPLICATION

(11) **EP 2 538 475 A2**
(43) Date of publication of application: **26.12.2012**
(21) Application number: 12172696.2
(22) Date of filing: 20.06.2012
(51) Int. Cl.: H01M 4/88

(54) **System and method for selective deposition of catalyst layer for PEM fuel cells utilizing inkjet printing**

(30) Priority: 20.06.2011 US 201161498993 P; 30.03.2012 US 201213436310
(71) Applicant: Xerox Corporation, Rochester, New York 14644 (US)
(72) Inventor: Roof, Bryan J, Newark, NY New York 14513 (US)
(74) Representative: Jones, Helen M.M.

(57) **Abstract**

In one embodiment, a method for forming electrodes on a substrate has been developed. The method includes operating a first plurality of printheads to eject a first ink onto a first portion of the substrate and operating a second plurality of printheads to eject a second ink onto a second portion of the substrate. The first ink includes a proton transport material and an electron transport material, and the second ink includes the proton transport material, the electron transport material, and a catalyst.

## Description

### Technical Field

This disclosure relates generally to systems and methods that form catalyst layers in fuel cells, and, more particularly, to inkjet printing systems that are configured to form catalyst layers on a proton exchange membrane, or electrodes.

### Background

Fuel cells are known that convert chemical energy stored in a fuel into another form of energy such as electricity or heat. While various forms of fuel cell have been known since the nineteenth century, interest in fuel cells has grown in recent years since fuel cells enable electric energy generation efficiently from a variety of hydrogen generation sources, thereby reducing dependence on traditional fossil fuel sources such as coal and oil. Current and future applications of fuel cells include, but are not limited to, power sources for road vehicles, space vehicles, and for home and industrial electrical power generation.

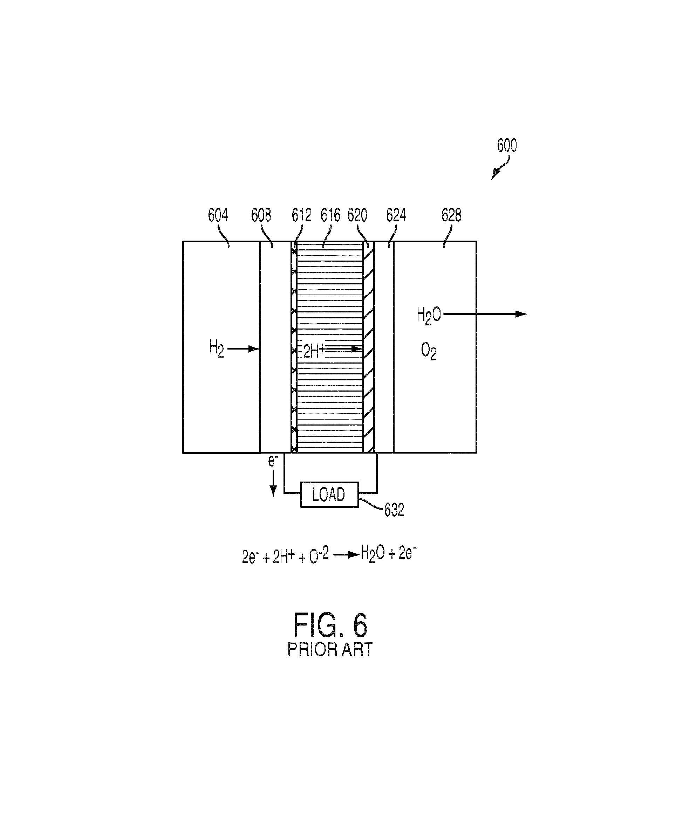

Typically, a fuel cell enables a fuel, such as hydrogen or a hydrocarbon, to combine with an oxidizer and produce electricity and a waste byproduct. Numerous combinations of fuel and oxidizer are known, and a basic fuel cell is configured to combine hydrogen with oxygen to produce electricity and water (H₂O) as a waste byproduct. Various fuel cell embodiments include two electrodes. One electrode is the anode that is configured to produce positive H⁺ ions when supplied with hydrogen gas (H₂) as fuel. Another electrode is the cathode that is configured to combine oxygen ions (O⁻²) with the hydrogen ions. In fuel cells that operate with a proton exchange membrane (PEM) the anode and cathode are formed on opposite sides of a planar PEM. Alternative fuel cell configurations use various fuels, oxidizers, catalysts, but share similar features to the fuel cell 600 depicted in FIG. 6.

FIG. 6 depicts a cross section of a fuel cell 600 that is configured to use hydrogen as a fuel and oxygen as an oxidizer. The fuel cell 600 includes an anode bipolar plate 604, anode gas diffusion layer 608, anode electrode layer 612, proton exchange membrane (PEM) 616, cathode electrode layer 620, cathode gas diffusion layer 624, and cathode bipolar plate 628. Each of the anode and cathode bipolar plates 604 and 628 include one or more channels that receive and distribute hydrogen and oxygen gas, respectively. The anode electrode layer 612 includes a catalyst that enables the H₂ gas molecules to ionize into H⁺ ions and free electrons e⁻. Various catalysts are known, with one example being platinum particles. The PEM 616 is configured to enable the H⁺ ions to travel from the anode layer 612 to the cathode layer 620. The PEM 616 is an example of an electrolyte that enables movement of charged particles between the anode and cathode. The PEM enables H⁺ ions to move from the anode to the cathode, but alternative fuel cell configurations include electrolytes that enable O⁻² ions to move from the cathode to the anode. In one embodiment, the PEM 616 is formed from perfluorosulfonic acid/polytetrafluoroethylene copolymer in the acidic (H⁺) form (sold commercially as Nafion®). The PEM 616 is configured to enable protons (H⁺ ions) to travel from the anode 612 to the cathode 620, while preventing the free electrons e⁻ from traveling through the PEM 616.

In operation, hydrogen gas is supplied to the anode bipolar plate 604. Channels formed in the anode bipolar plate 604 distribute the hydrogen to the anode gas diffusion layer 608 to enable the hydrogen to flow toward to the anode catalyst layer 612. The anode gas diffusion layer 608 is a thin layer of porous material such as carbon paper. The hydrogen gas is in a diatomic molecule H₂. The catalyst in the catalyst layer 612 promotes ionization of the H₂ molecules to form H⁺ ions. The H⁺ ions flow through the PEM 616 to the cathode electrode layer 620.

The cathode electrode layer 620 also includes a catalyst that promotes combination of oxygen ions O⁻² with 2H⁺ ions to form water (H₂O). Oxygen is supplied to the cathode electrode layer 620 via channels formed in the cathode bipolar plate 628 that flows through a cathode gas diffusion layer 624 to the cathode electrode layer 620. The liberated electrons e- flow from the anode electrode layer 612 to a load 632 and then return to the cathode electrode layer 620 to form an electrical circuit. In a typical fuel cell system, multiple fuel cells, such as fuel cell 600, are electrically connected in a series or parallel configuration, referred to as a fuel cell stack, to generate electrical power at a predetermined current and voltage. The combination of 2H⁺ and O⁻² ions is also an exothermic reaction, and the heat generated in the reaction may be used for heating or for electrical energy production as well.

In a reverse mode of operation, the fuel cell 600 may be operated as an electrolyzer. In the reverse mode, the load 632 supplies an electric current to the anode layer 612 and cathode layer 620. When the fuel cell 600 operates as an electrolyzer, H₂O supplied to the cathode bipolar plate 628 is electrolyzed to generate O₂ molecules and H₂ molecules. The generation of H₂ molecules from H₂O molecules is referred to as electrolysis. The catalysts in the anode layer 612 and cathode layer 620 promote the electrolysis process to enable the fuel cell 600 to generate H₂ molecules from H₂O while consuming less electrical power than is required to electrolyze H₂O in the absence of the catalyst. One known use for a fuel cell in an electrolyzer configuration is to couple the fuel cell to an intermittent power source such as a wind turbine or solar power array. The fuel cell electrolyzes hydrogen using excess electricity provided by the power source when the power source is operational, and the fuel cell consumes the hydrogen to produce electrical power when the intermittent power source is inoperative.

As noted above, the anode layer and cathode layer include a catalyst such as platinum or palladium. Existing techniques for forming the anode and cathode layers seek to distribute the catalysts evenly over the surface of the PEM to enable uniform proton flows through the PEM. The cost of metallic catalysts is an important component in the manufacturing cost of a fuel cell. Existing techniques for forming the electrode layers place catalyst in locations where the catalyst is less effective for promoting the electrochemical reactions that occur in the fuel cell. Thus, improvements to the formation of anode and cathode layers in fuel cells that reduce the amount of catalyst required to produce an operational fuel cell would be beneficial.

### SUMMARY

In one embodiment, a method for forming electrodes on a substrate has been developed. The method includes operating a first plurality of inkjets to eject a first plurality of liquid drops of a first ink having a proton transport material and an electron transport material onto a first portion of a surface of a substrate, and operating a second plurality of inkjets to eject a second plurality of liquid drops of a second ink having the proton transport material, the electron transport material, and a catalyst onto a second portion of the surface of the substrate, the second portion being different than the first portion.

In another embodiment, an electrode for a fuel cell has been developed. The electrode includes a planar substrate, a first ink formed on a first portion of a surface of the planar substrate, and a second ink formed on a second portion of the surface of the planar substrate that is different than the first portion. The first ink includes a proton transport material and an electron transport material. The second ink includes the proton transport material, the electron transport material, and a catalyst. The first ink and the second ink form a single electrical conductor over the first portion and the second portion of the surface of the substrate.

### BRIEF DESCRIPTION OF THE DRAWINGS

The foregoing aspects and other features of a method and printing system, which are configured to form anodes and cathodes with selected catalyst distributions, are described in connection with the accompanying drawings.

FIG. 1 is a schematic diagram of a printing system which is configured to print at least two types of ink onto a layer of material used in a fuel cell.

FIG. 2 is a schematic view of a portion of the printing system of FIG. 1.

FIG. 3 is a block diagram of a process for forming electrodes on a layer of material used in a fuel cell using an inkjet printing system.

FIG. 4 is a block diagram of another process for forming electrodes on a layer of material used in a fuel cell with an inkjet printing system.

FIG. 5 is a cross-sectional view of a gas diffusion layer (GDL) material with an electrode printed on the GDL.

FIG. 6 is a schematic diagram of a prior art fuel cell.

FIG. 7 is a plan view of a prior art bipolar plate that is configured to receive hydrogen or oxygen gas and supply the gas to a fuel cell.

### DETAILED DESCRIPTION

For a general understanding of the environment for the system and method disclosed herein as well as the details for the system and method, reference is made to the drawings. In the drawings, like reference numerals have been used throughout to designate like elements. As used herein, the term "imaging device" refers to any printer, copier, multi-function device, or the like that is configured to form ink images on an image receiving member. As used herein, the term "image receiving member" refers to a print substrate, such as a proton exchange membrane, or can be an intermediate imaging member, such as a print drum or endless belt, which holds ink images formed by inkjet printheads. As used herein, the term "process direction" refers to a direction in which an image receiving member moves relative to one or more printheads during an imaging operation. The term "cross-process direction" refers to a direction that is perpendicular to the process direction along the surface of the image receiving member.

As used herein, the term "fuel cell" refers to both devices that employ electrochemical reactions between a fuel and an oxidizer to generate heat and electricity, and to devices that generate H₂ from a molecule including hydrogen, such as H₂O, when the device is supplied with electricity. The person having ordinary skill in the art should recognize that some fuel cell embodiments operate in a first mode to generate electricity, and in a second mode to produce H₂.

In a typical embodiment, a fuel cell includes an anode and a cathode that are separated by a proton exchange membrane. As used herein, the term "anode" as applied to a proton exchange membrane fuel cell in an electricity generating operating mode refers to an electrode that is configured to produce positive H⁺ ions when supplied with hydrogen gas (H₂) as fuel. As used herein, the term "cathode" as applied to a proton exchange membrane fuel cell in an electricity generating operating mode refers to an electrode that is configured to combine oxygen ions (O⁻²) with the hydrogen ions. As used herein, the term "proton exchange membrane" (PEM) refers to a component of a fuel cell that enables protons (H⁺ions) that are generated in the anode of the fuel cell to travel to the cathode of the fuel cell. The PEM is further configured to prevent free electrons e- from traveling directly from the anode to the cathode, and to enable the free electrons e- to flow through a load in an electrical circuit, such as load 632 depicted in FIG. 6.

As used herein, the term "electron transport material" refers to any material that is suitable for enabling a flow of electrons. Common examples include electrically conductive metals and elements, such as carbon, that are electrically conductive. As used herein, the term "proton transport material" refers to any material that is suitable for enabling a flow of protons (H⁺ ions) in a fuel cell. The proton exchange membrane in a fuel cell is formed from a proton transport material such as a film of perfluorosulfonic acid/ polytetrafluoroethylene copolymer in the acidic (H⁺) form, sold commercially as Naflon®. Nafion is one example of an ionomer material that is used commercially as a proton exchange membrane in fuel cells, but alternative embodiments use different proton transport materials.

As used herein, the terms "electrically continuous" and "electrical continuity" as applied to an electrode refer to the electrical conductivity of the electrode. An electrically continuous electrode has a surface where any two arbitrarily selected locations on the surface of the electrode are electrically connected to each other. In electrodes that are formed from electrically conductive ink drops, the drops form an electrically continuous electrode when ink drops merge together to form a single, electrically conductive layer.

As used herein the term "planar" refers to a surface of a material or component used in a fuel cell that is essentially a two-dimensional surface at a macroscopic scale. For example, fuel cells incorporate multiple layers of materials such as proton exchange membranes and gas diffusion layers having planar surfaces to enable stacking of multiple layers of material in the fuel cell. Additionally, as is described in more detail below, an inkjet printing system forms planar electrodes from multiple types of ink on a planar substrate in the fuel cell.

As used herein, the term "printhead" refers to a group of inkjet ejectors arranged in fixed physical relationship to one another. The term "print bar" as used in this document refers to a linear arrangement of printheads that are configured for linearly movement as a group. The printhead group collectively referred to as a print bar is operatively connected to an actuator to enable the movement of the entire group in the cross-process direction. Some or all of the printheads in a print bar can be operatively connected to actuators that enable the printheads to move in a cross-process direction independently with respect to the other printheads in the print bar. In a staggered print bar arrangement, printheads are arranged in two groups or print bars that are positioned relative to one another in a staggered pattern. The staggered configuration enables the printheads on the two print bars to emit ink drops in a continuous line across an image receiving member in the cross-process direction. Two or more print bars with printheads in the staggered arrangement are referred to as a "print bar array."

Some printing systems include print bar arrays with printheads that are configured to emit drops of a single type of ink. In one embodiment described below, a first print bar array enables ink printing at a resolution of 300 dots per linear inch (DPI) in the cross-process direction. A second print bar array also prints at 300 DPI in the cross-process direction. Each printhead in the second print bar array is configured to act as a redundant printhead for one of the printheads in the first print bar array. If one or more ejectors in a printhead in the first print bar array become inoperable, the corresponding redundant printhead in the second print bar array is activated to enable the printing system 100 to form electrodes on the print substrate 114.

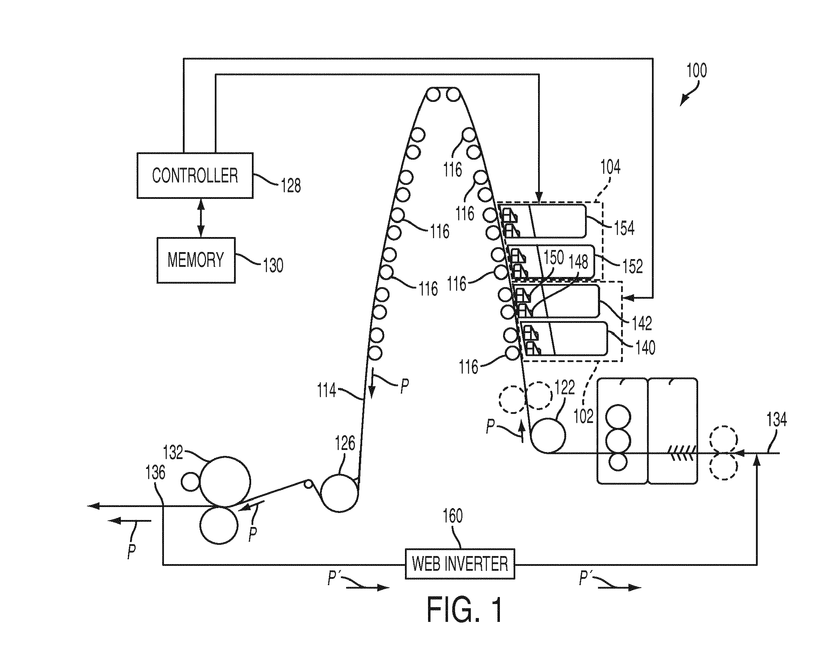

FIG. 1 depicts a continuous web printing system 100 that includes two print modules 102 and 104; a media path configured to move a print substrate 114 in a process direction along a media path P; a controller 128; and a memory 130. The printing system 100 is configured to transport the print substrate 114 along the media path P using various rollers including rollers 122, 116, and 126. The print modules 102 and 104 are positioned sequentially along the media path and form a print zone for forming images on a print substrate 114 as the print substrate 114 travels past the print modules.

In one configuration, the print substrate 114 is the proton exchange membrane (PEM) used in a fuel cell. The PEM is provided in the form of an elongated roll of a flexible material such as Nafion. In other configurations, the print substrate 114 is one of the gas diffusion layers, such as gas diffusion layers 608 and 624, which are depicted in FIG. 6. The gas diffusion layers are provided as elongated rolls of carbon paper or another gas diffusion material that is suited for inkjet printing.

In one configuration, the printing system 100 forms a cathode electrode or an anode electrode on one side of the print substrate 114 in a simplex printing mode. In one embodiment, the simplex mode forms electrodes using a gas diffusion layer (GDL) as substrate 114. Referring to FIG. 6, the fuel cell 600 includes two GDL layers 608 and 624. The printing system 100 prints a combination of catalyst ink and non-catalyst ink onto two separate segments of GDL substrate 608 and 624 to form the anode and cathode electrodes 612 and 620, respectively.

In another configuration, the printing system 100 forms electrodes on both sides of the substrate 114 in a duplex print mode. The duplex mode is suited to configurations where the PEM is used as the print substrate 114, since electrodes are positioned on both sides of the PEM in a fuel cell. A first side of print substrate 114 moves through the print zone past print modules 102 and 104 that form electrodes on the first side of the print substrate 114. The print substrate 114 exits the print zone at location 136 and is diverted through a web inverter 160 that reorients the print substrate 114 to enable a second side of the print substrate 114 to move through the print zone in tandem with the first side. In an alternative duplex configuration, the print substrate 114 exits the print zone at location 136, passes through a web inverter, and enters a second print zone in another imaging system having a similar configuration to the system 100. The second imaging system ejects ink drops to form electrodes on the side of the print substrate 114.

In printing system 100, the print modules 102 and 104 are configured to eject ink drops of two types of ink that form electrodes on the print substrate 114. Print module 102 is configured to eject a first ink that includes a suspension of electron transport material particles and proton transport material particles. In one embodiment, electron transport material is formed from carbon particles, such as carbon black. The proton transport particles are formed from Nafion strands that are approximately 2 µm in length.

Print module 104 is configured to eject a second ink. The second ink includes the electron transport and proton transport particles, and further includes catalyst particles. Typical examples of catalyst particles include platinum, palladium, and nickel. Particles of various other catalysts, including metallic, oxide, and organic catalysts can be suspended in the ink as well. In one embodiment, the second ink includes a suspension of platinum (Pt) catalyst particles having a diameter of approximately 5 - 10 nanometers, the carbon black electron transport particles, and the approximately 2 µm long Nafion proton transport particles. As described in more detail below, the print modules 102 and 104 are configured to eject ink drops of both types of ink onto a print substrate to form the electrodes.

Both the first and second inks suspend particles in a solvent. The solvent is a volatile compound that evaporates after the ink is printed onto the print substrate 114. In the case of the first ink, the carbon and Nafion particles remain on the print substrate 114 after the solvent evaporates. This can be referred to as an ink residue which would be understood by a person skilled in the art to mean the residue remaining after evaporation of the solvent. The carbon, Nafion, and catalyst particles remain on the print substrate 114 in locations where drops of the second ink land on the print substrate 114 after the solvent in the second ink evaporates. The patterns of the first and second inks formed on the print substrate 114 form electrodes for use as either anodes or cathodes in a fuel cell. The inkjets in print modules 102 and 104 are piezoelectric inkjets that are configured to eject ink drops in response to a mechanical force generated by a piezoelectric transducer positioned in each inkjet. In one operating mode, the piezoelectric inkjet ejectors are configured to eject drops of the first and second inks at room temperature (approximately 20°C).

Alternative printing systems are configured with more or fewer print modules for printing processes having various inks. For example, additional print modules in the print zone can be configured to eject inks having different catalysts such as nickel. Other configurations include print modules that eject inks that include different concentrations of the catalyst. For example, in a printer with three printing stations, a first printing station ejects ink drops with a high concentration of the catalyst, a second printing station ejects ink with a lower concentration of the catalyst, and a third printing station ejects ink that only includes the electron and proton conductors without including the catalyst. Except for ejecting different types of ink, the print modules 102 and 104 are substantially identical.

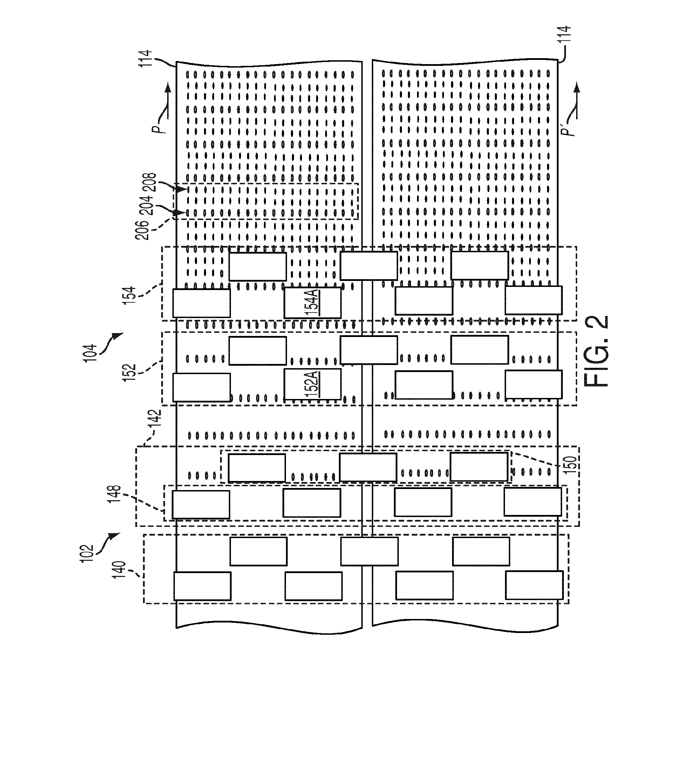

FIG. 2 depicts the print modules 102 and 104 in more detail. Print module 102 includes two print sub modules 140 and 142. Print sub module 142 includes two print bars 148 and 150. The print bars 148 and 150 each include an array of printheads that can be arranged in a staggered configuration across the width of both the first section of web media and the second section of web media. In a typical embodiment, print bar 148 has four printheads and print bar 150 has three printheads. The printheads in print bars 148 and 150 are positioned in a staggered arrangement to enable the printheads in both print bars to emit ink drops in a continuous line in the cross-process direction over the first side and second side of the print substrate 114 at a predetermined resolution. In the configuration of FIG. 2, the printheads in the print sub-module 142 are configured to print in a duplex mode to both sides of the print substrate 114 in tandem, with one section of the first side of the print substrate 114 on the media path P and a second section of the second side of the print substrate 114 on the media path P'. In another configuration, the printheads in the print sub-module 142 print onto a single side of a print substrate 114 that extends across the printhead arrays in the cross-process direction.

Print module 102 includes a second sub-module 142 that includes print units 148 and 150 in the same configuration as sub-module 140. Print module 104 includes print sub-modules 152 and 154 that are configured in the same manner as in print module 102. Corresponding printheads in each sub-module are configured to operate redundantly when ejectors in a printhead become inoperable. For example, printhead 154A in sub-module 154 ejects ink drops of the second type of ink during normal operation. If one or more inkjets in the printhead 154A become inoperable, the printhead 154A is deactivated and the redundant printhead 152A is activated. The redundant printhead 152A is aligned with printhead 154A in the cross process direction and prints the second ink to form electrodes on the print substrate 114.

Controller 128 is configured to control various subsystems, components and functions of printing system 100. In various embodiments, the controller 128 is implemented with general or specialized programmable processors that execute programmed instructions. Controller 128 is operatively connected to memory 130 to enable the controller 128 to read instructions and read and write data required to perform the programmed functions in memory 130. These components can be provided on a printed circuit card or provided as a circuit in an application specific integrated circuit (ASIC). Each of the circuits can be implemented with a separate processor or multiple circuits can be implemented on the same processor. Alternatively, the circuits can be implemented with discrete components or circuits provided in VLSI circuits. Also, the circuits described herein can be implemented with a combination of processors, ASICs, discrete components, or VLSI circuits.

Controller 128 is operatively coupled to the print modules 102 - 104 and controls the timing of ink drop ejection from the print modules 102 - 104 onto the print substrate 114. In particular, the controller 128 generates electrical firing signals that operate inkjets in the print modules 102 and 104 to form predetermined patterns of the first and second inks on the print substrate 114. The controller 128 retrieves image data from the memory 130 that correspond to the electrode patterns to be formed on the print substrate 114. The ink patterns are selected to form electrodes that distribute the catalyst in the second ink on the print substrate 114 to promote efficient fuel cell operation. The first ink is used in remaining portions of the electrode to maintain the electrical conductivity of the electrode, while reducing the total amount of catalyst used to form the electrode.

In some embodiments, a spreader roll 132 applies pressure to the ink drops on the print substrate 114 after the print substrate 114 passes the print modules 102 and 104. During the spreading process, ink drops that are located in close proximity to one another on the print substrate 114 merge together forming a continuous area of ink on the print substrate 114. The continuous area of ink forms an electrically continuous electrode on each side of the print substrate 114. In alternative configurations, the ink spreads on the print substrate 114 without the need for a spreader roller.

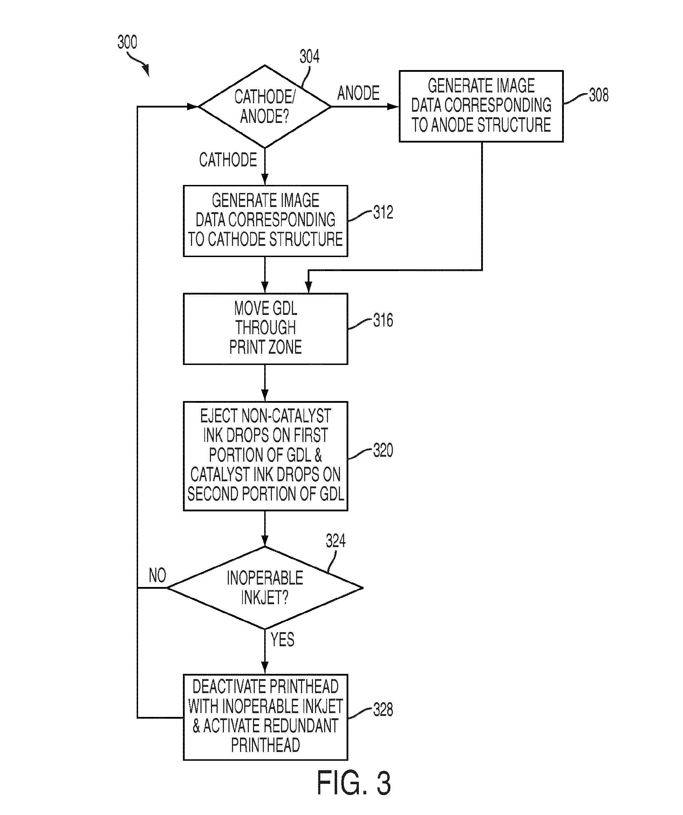

FIG. 3 depicts a process 300 for forming anode and cathode electrodes on a gas diffusion layer (GDL) used in a fuel cell. In one embodiment, the GDL is carbon paper, and the printing system 100 forms the electrodes on elongated rolls of carbon paper 114 for mass production of fuel cell electrodes. The GDL provides a planar printing substrate with a uniform surface for forming electrodes using the inkjet printing system 100. In the discussion below, a reference to the process performing a function or action refers to a controller executing programmed instructions stored in a memory to operate one or more components of the printer to perform the function or action.

Process 300 begins with selection of an operating mode for printing an anode or cathode electrode (block 304). If an anode is selected, then process 300 generates image data corresponding to a printed pattern of both inks that form an anode electrode (block 308). If a cathode is selected, then process 300 generates image data corresponding to a printed pattern of both inks that form a cathode electrode (block 312). In the printing system 100, the controller 128 generates the image data in a two dimensional arrangement for printing both the catalyst ink and the non-catalyst ink onto the GDL 114. In some embodiments, both the cathode electrode and anode electrode use a common pattern of ink drops. In other embodiments, different patterns of the cathode and anode layers are selected to correspond to the flow of H₂ gas and O₂ gas through the GDL material of the anode and cathode, respectively. For example, in some fuel cells the H₂ gas flows into the anode GDL in a direction that is perpendicular to the direction of O₂ gas flowing into the cathode GDL. The printing system 100 generates image data for the cathode and anode electrodes that are rotated by 90° to correspond to the gas flow through the fuel cell.

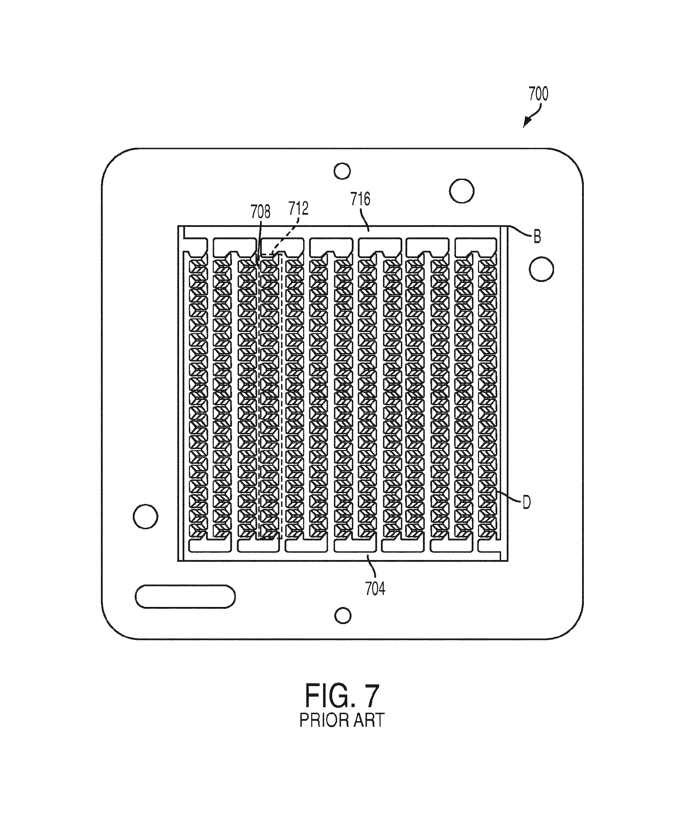

In some embodiments, the structure of the electrode is selected to conform to the arrangement of channels in one of the bipolar plates that provide hydrogen or oxygen gas to the fuel cell. FIG. 7 depicts an example configuration of one prior art bipolar plate 700. The plate 700 includes an inlet channel 704, a plurality of coarse distribution channels 708, fine distribution channels 712, and an exhaust channel 716. In operation, a gas, such as hydrogen, is supplied through the inlet channel 704 and flows towards the exhaust channel 716. The gas flows through the coarse distribution channels 708 and permeates the fine distribution channels 712. The coarse distribution channels 708 have a greater carrying capacity than the fine distribution channels 712. Some of the gas leaves the bipolar plate 700 and enters an electrode, such as the anode. In the example of the plate 700, the gas distributed in the coarse channels is intended to reach the fine distribution channels 712 prior to reacting with the catalyst in the electrode to promote a uniform electrochemical reaction over the surface of the electrode.

In the electrode configuration of FIG. 2, the distribution of catalyst in the electrode corresponds to the distribution pattern of gas in the bipolar plate 700. A portion of an electrode 206 includes columns of the first ink 204 that are positioned in the electrode to align with the coarse distribution channels 708 in the bipolar plate 700. The first ink does not contain catalyst, resulting in a reduced rate of reaction for gas in the coarse distribution channels 708 in the bipolar plate 700. Columns of the second ink 208 that hold catalyst are configured to align with the columns of fine distribution channels 712 in the bipolar plate 700. The columns of the second ink 208 in the electrode 206 contain the catalyst that promotes increased rates of reaction from gas received from the fine distribution channels 712 in the bipolar plate. The first ink 204 maintains the electrical continuity of the electrode while not requiring that catalyst be distributed near the coarse distribution channels 708 in the bipolar plate 700. Thus, the arrangement of catalyst in the electrode 206 reduces the total amount of catalyst required to form the electrode and enables uniform reactions between the gas and the electrode over the surface of the electrode. Image data corresponding to the selected structure of the electrode 206 are generated and stored in the memory 130.

In some embodiments, the anode and cathode electrodes are formed with different arrangements of ink containing the catalyst and ink not containing the catalyst. In other embodiments, the anode and cathode are formed with different catalysts that are applied using different ink modules that are arranged in the print zone. For example, an anode is formed with a platinum catalyst while the cathode is formed with a nickel catalyst, or vice versa. In the printing system 100, the controller obtains two sets of image data that correspond to the electrodes formed on each side of the print substrate 114 from the memory 130.

Process 300 continues by moving the GDL 114 through the print zone past print modules 102 and 104 (block 316). As the GDL 114 moves through the print zone, the controller 128 generates firing signals for inkjets in the print modules 102 and 104. The print modules eject ink drops to form one or more electrodes on a surface of the GDL 114 with an arrangement of ink corresponding to the image data (block 320). One portion of each electrode receives ink drops from the print module 102 that do not contain the catalyst material, and a second portion of the electrode receives ink from the print module 104 that contains the catalyst. Both the first and second inks formed in the electrode combine to form an electrically continuous electrode on GDL 114.

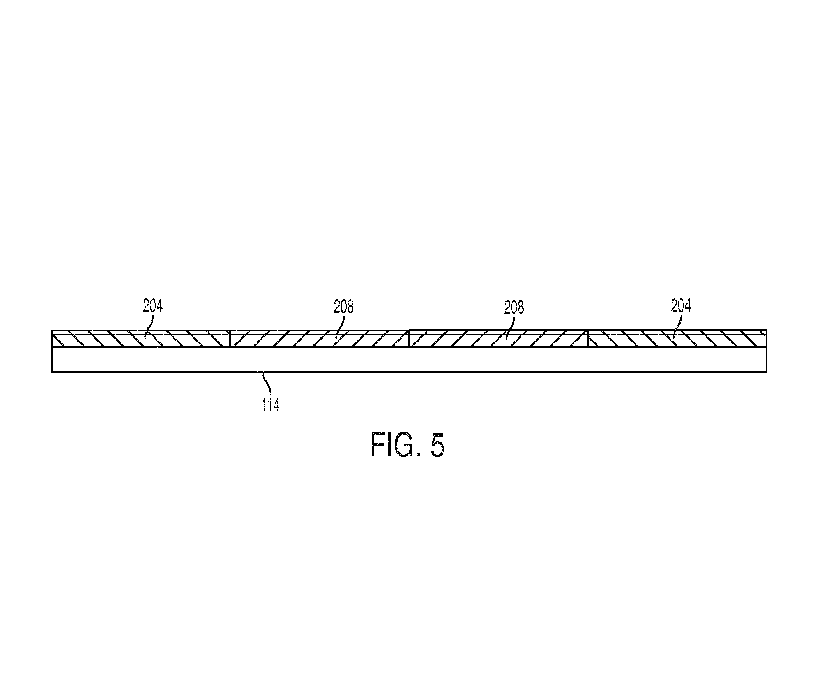

Since the GDL 114 is typically formed from a porous material, a portion of the ejected ink permeates into the GDL 114. As depicted in FIG. 5, after a carbon paper GDL 114 is printed, the GDL includes regions of non-catalyst bearing ink 204 and catalyst bearing ink 208. The ink drops partially permeate the GDL 114 and merge together to form a continuous electrically conductive electrode on the GDL 114. The electrode adheres to the fibers in the carbon paper forming the GDL 114 and the GDL 114 remains sufficiently porous to allow gas to pass through the GDL 114 during operation. The electrode has a planar surface formed from the combination of inks 204 and 208 that conforms to the planar surface of the GDL 114. The ink drops 204 and 208 spread due to capillary action between the first ink and second ink with the GDL 114, and the spreader roll 132 in the printing system 100 applies pressure to spread the ink drops 204 and 208.

During operation, one or more inkjet ejectors in a printhead may become inoperable (block 324). "Inoperable" refers to an inkjet that is unable to generate ink drops or one that ejects ink drops onto incorrect locations of the print substrate 114. Various techniques are used to identify inoperable inkjets. One technique is to measure the electrical conductivity of an electrode formed on the print substrate 114. Faults in the conductivity of the electrode indicate inoperable inkjets. When a printhead is identified as having one or more inoperable inkjets, a corresponding redundant printhead is used to maintain operation of the printing system 100. As depicted in FIG. 2, if inoperable ink ejectors are identified in printhead 154A, then the printhead 154A is deactivated and printhead 152A is activated to continue forming electrodes on the print substrate 114 (block 328). In another configuration, the controller 128 deactivates the entire print sub-module 154 and activates the redundant print sub-module 152 when inkjets in the sub-module 154 are identified as being inoperable. The use of redundant printheads enables the printing system 100 to continue operation for longer periods of time between printhead maintenance.

In one configuration, process 300 prints large numbers of anode or cathode electrodes consecutively as part of a print job. For example, in the printing system 100 an entire continuous web of carbon paper is printed with either the anode pattern or the cathode pattern. In another configuration, process 300 alternates between printing anode and cathode electrodes on a single media web. After completion of the print job, the continuous media web is cut into individual sheets corresponding to individual anodes and cathodes for fuel cells. While the printing system 100 is configured to print anode and cathode electrodes on a continuous roll of GDL material, a cut sheet inkjet printer can also form electrodes on individual sheets of a GDL material such as carbon paper.

Process 300 is suitable for use with a wide variety of electrode structures. While FIG. 2 depicts one electrode structure 206 that is suitable for use with the example bipolar plate 700, the printing system 100 is configured to produce a wide variety of electrode structures using two or more inks with various catalysts. The printing system 100 is also reconfigurable to generate different electrode structures by providing revised image data to the controller 128. Thus, the printing system 100 is suitable for production of various different electrodes that are suited to a wide range of fuel cell designs.

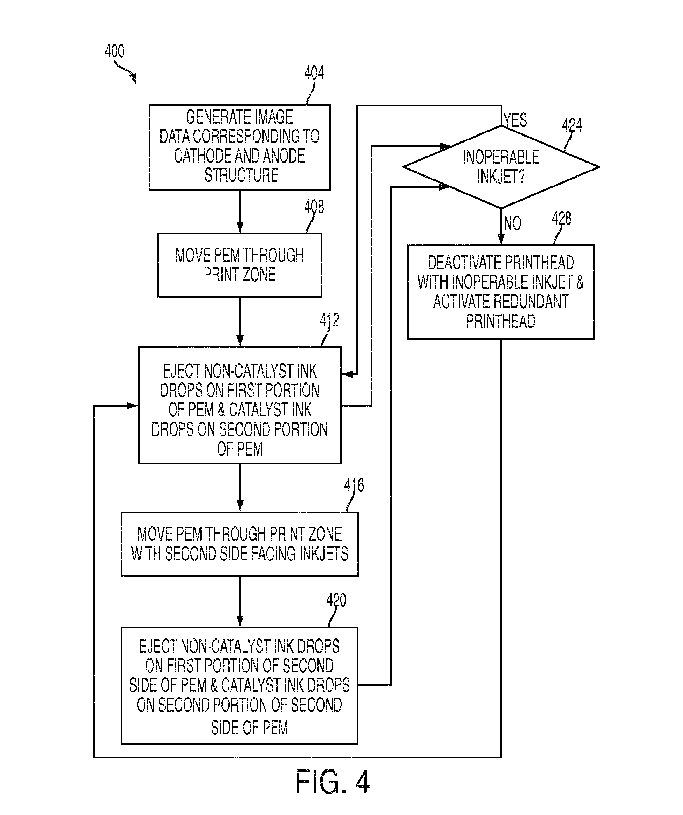

FIG. 4 depicts a process 400 for forming anode and cathode electrodes on a PEM layer of material in a fuel cell, such as a Nafion PEM layer. In one embodiment, the printing system 100 prints both an anode and cathode on the PEM using a duplex print mode. The PEM provides a planar printing substrate with a uniform surface for forming electrodes using the inkjet printing system 100. In the discussion below, a reference to the process performing a function or action refers to a controller executing programmed instructions stored in a memory to operate one or more components of the printing system to perform the function or action.

Process 400 begins by generating image data that correspond to the structure of the electrode (block 404). As described above, the printing system 100 generates image data for the anode and cathode electrodes. The printing system 100 can generate the same image data for both the anode and cathode, or can generate different image data to print different ink patterns for the anode and cathode electrodes. Many electrodes completely cover a selected portion of the layer with an electrically conductive material. The structure of the electrode refers to the distribution of catalyst material within the electrode. Inkjet imaging systems, such as system 100, are configurable to produce a wide variety of electrode patterns by generating various arrangements of image data that correspond to different electrode configurations.

Process 400 moves the PEM through the print zone in the process direction P (block 408). In the printing system 100, the PEM is formed as a continuous web 114 and the PEM 114 moves past the printhead modules 102 and 104. As the PEM 114 moves through the print zone, the controller 128 generates firing signals for inkjets in the print modules 102 and 104. The print modules eject ink drops to form one or more electrodes on a first side of the PEM 114 with an arrangement of ink corresponding to the image data (block 412). One portion of each electrode receives ink drops from the print module 102 that do not contain the catalyst material, and a second portion of the electrode receives ink from the print module 104 that contains the catalyst. Both the first and second inks formed in the electrode combine to form an electrically continuous electrode on PEM 114.

Process 400 includes an optional duplex mode, that is depicted here for configurations that print both anodes and cathodes on the PEM. In the duplex mode, a second side of the PEM moves through the print zone (block 416). Printheads that are configured to eject ink onto the second side of the PEM eject ink drops to form electrodes on the second side of the PEM (block 420). As described above, printing system 100 is configured for duplex printing. In the duplex mode, the printing system 100 forms anodes on one side of the print substrate 114 and cathodes on the other side of the print substrate 114. The anodes and cathode are aligned with each other in the process direction on both sides of the print substrate 114 for use in a fuel cell such as fuel cell 600.

During operation, one or more inkjet ejectors in a printhead may become inoperable (block 424). "Inoperable" was defined above.. In process 400, the printing system 100 identifies inoperable inkjets in a similar manner to the processing of block 324 described above in process 300. The printing system 100 selectively deactivates a printhead or printhead unit containing the inoperable inkjet and activates a redundant printhead or printhead unit to continue printing of the electrodes (block 428). The use of redundant printheads enables the printing system 100 to continue operation for longer periods of time between printhead maintenance. While the printing system 100 is configured to print anode and cathode electrodes on a continuous roll of PEM material, a cut sheet inkjet printer can also form electrodes on individual sheets of a PEM material such as Nafion.

Both process 300 and process 400 are suitable for formation of electrodes in a fuel cell that is assembled using a high-pressure assembly process. The high pressure assembly process joins the anode bipolar plate 604, anode gas diffusion layer 608, anode electrode layer 612, proton exchange membrane (PEM) 616, cathode electrode layer 620, cathode gas diffusion layer 624, and cathode bipolar plate 628 under pressure, typically in a range of approximately 2,000 pounds per square inch (PSI) to 5,000 PSI. The high pressure assembly process can also form a stack of multiple fuel cell elements. As depicted in FIG. 5, the printed ink layers on the GDL or on a PEM form a uniform electrode layer that withstands high-pressure assembly. The printed ink layers forming the anode electrode 612 and cathode electrode 620 remain intact under pressure in the assembled fuel cell stack when printed on either the PEM 616 or on the anode gas diffusion layer 608 and cathode gas diffusion layer 624.

It will be appreciated that variants of the above-disclosed and other features, and functions, or alternatives thereof, may be desirably combined into many other different systems or applications. For example, while the printing system 100 described herein is configured to form electrodes on a continuous media web, an alternative inkjet printing system forms the electrodes on individual sheets of a PEM material or individual sheets of a gas diffusion layer material such as carbon paper. Additionally, while PEM type fuel cells are depicted in the exemplary embodiments, the systems and methods described herein are also applicable to other fuel cell designs where anodes and cathodes are formed using a catalyst. Various presently unforeseen or unanticipated alternatives, modifications, variations, or improvements therein may be subsequently made by those skilled in the art, which are also intended to be encompassed by the following claims.

## Claims

1. A method of forming an electrode comprising:
operating a first plurality of inkjets to eject a first plurality of liquid drops of a first ink having a proton transport material and an electron transport material onto a first portion of a surface of a substrate; and
operating a second plurality of inkjets to eject a second plurality of liquid drops of a second ink having the proton transport material, the electron transport material, and a catalyst onto a second portion of the surface of the substrate, the second portion being different than the first portion.

2. The method of claim 1, wherein the proton transport material is an ionomer, preferably wherein the ionomer is comprised of perfluorosulfonic acid/polytetrafluoroethylene copolymer in acidic form.

3. The method of claim 1 or 2, wherein the electron transport material is comprised of carbon.

4. The method of any preceding claim, wherein the substrate is a proton exchange membrane, preferably wherein said proton exchange membrane is comprised of perfluorosulfonic acid/polytetrafluoroethylene copolymer in acidic form.

5. The method of claim 1, wherein the substrate is a gas diffusion layer, preferably wherein said gas diffusion layer is essentially comprised of carbon paper.

6. The method of claim 1, wherein the catalyst is comprised of platinum or palladium, preferably platinum.

7. The method of claim 1 further comprising:
operating the first plurality of inkjets to eject a third plurality of liquid drops of the first ink onto a third portion of another surface of the substrate; and
operating the second plurality of inkjets to eject a fourth plurality of liquid drops of the second ink onto a fourth portion of the another surface of the substrate, the fourth portion being different than the third portion.

8. The method of claim 1 further comprising:
operating the first plurality of inkjets to eject a third plurality of liquid drops of the first ink onto a third portion of another surface of the substrate; and
operating a third plurality of inkjets to eject a fourth plurality of liquid drops of a third ink having the proton transport material, the electron transport material, and another catalyst onto a fourth portion of the other surface of the substrate, the fourth portion being different than the third portion.

9. The method of claim 8, wherein the another catalyst is comprised of nickel.

10. The method of claim 1 further comprising:
identifying an inoperable inkjet in the second plurality of inkjets;
deactivating at least a portion of the second plurality of inkjets in response to identifying the inoperable inkjet; and
activating a third plurality of inkjet ejectors, the third plurality of inkjet ejectors being configured to eject the second ink onto a same portion of the substrate as the deactivated inkjets.

11. The method of claim 1 further comprising:
applying pressure to the substrate after ejecting the first plurality of liquid drops and the second plurality of liquid drops onto the surface of the substrate to spread the first plurality of liquid drops and the second plurality of liquid drops to form a single electrical conductor on the first portion and the second portion of the surface of the substrate.

12. An electrode for use in a fuel cell comprising:
a planar substrate;
a first ink formed on a first portion of a surface of the planar substrate, the first ink having a proton transport material and an electron transport material; and
a second ink formed on a second portion of the surface of the planar substrate that is different than the first portion, the second ink having the proton transport material, the electron transport material, and a catalyst, the first ink and the second ink forming a single electrical conductor over the first portion and the second portion of the surface of the substrate.

13. The electrode of claim 12, having the further features as defined in any of claims 2 to 6.

14. A fuel cell comprising an electrode according to claims 12 or 13.
